# EUROPEAN PATENT APPLICATION

(11) **EP 1 868 198 A1**
(43) Date of publication of application: **19.12.2007**
(21) Application number: 07108584.9
(22) Date of filing: 22.05.2007
(51) Int. Cl.: G11B 20/12, G11B 27/28

(54) **Recording control method of rewritable type optical disc and drive unit for recording and reproducing the same**

(30) Priority: 30.05.2006 JP 2006150011
(71) Applicant: NEC CORPORATION, Tokyo (JP)
(72) Inventor: Yamanaka, Yutaka, Minato-ku, Tokyo (JP)
(74) Representative: Betten & Resch

(57) **Abstract**

In the recording on a rewritable optical disc (1), the searching time for the no data area is reduced. In this method, data is recorded in ECC blocks (20), each of which is a minimum unit region in the recording operation by the drive unit (33). Recording blocks (21) are assigned to the user data region (4) of the optical disc so that each recording block includes at least two ECC blocks. A bit map is generated. Every 1 bit data of the bit map represents the recording state of a recording block (21). By referencing the bit map, the area in which data is not recorded can be searched in a short time.

## Description

### Background of the Invention

### 1. Field of the Invention

The present invention relates to a drive unit for recording and reproducing data through a micro optical spot, and a recording control method of a rewritable type optical disc that is used in a drive unit.

### 2. Description of the Related Art

In the field of the optical disc, where the micro optical spot are used to record and reproduce a data, following the ROM (Read Only Memory) medium dedicated to the reproduction on which embossed data pit rows are formed in advance, CD-R (Compact Disc-Recordable) and DVD-R (Digital Versatile Disc-Recordable) which are optical discs that can record the data are widely spread. Also, optical discs which are referred to as CD-RW (CD-ReWritable) and DVD-RW (DVD-ReWritable) where the recorded data can be rewritten are used. Moreover, a standard referred to as HD DVD is issued where a blue light source is used as a next generation DVD.

In the rewritable type optical disc, a spiral groove track for tracking is formed on an optical disc substrate, and rewritable multi-layer record film structure that includes phase change materials is formed thereon. Record pits are formed by using a method where the laser light of high power is collected onto this record film, and the crystal structure of the phase change material is partially changed, thereby forming the record pits. Data is recorded in the record pits. After the recording, the data format having the same configuration as the ROM medium where the embossed data pit rows are formed is constructed. As a result, servo signals having substantially same to those of the embossed data pit can be obtained. Thus, even in the drive unit dedicated to the reproduction, the reproduction can be easily executed.

The recorded data is erased by emitting the laser light whose power is slightly low as compared with the case when the data is recorded to return the crystal structure of the phase change material to the original state. In the actual operation, the laser light of the waveform that is generated by adding the recording power of data to be newly added to the recording power that enables the erasing. Thus, the already-recorded data is erased and the new data is recorded so that the data are rewritten. That is, the already-recorded data is directly rewritten to new data.

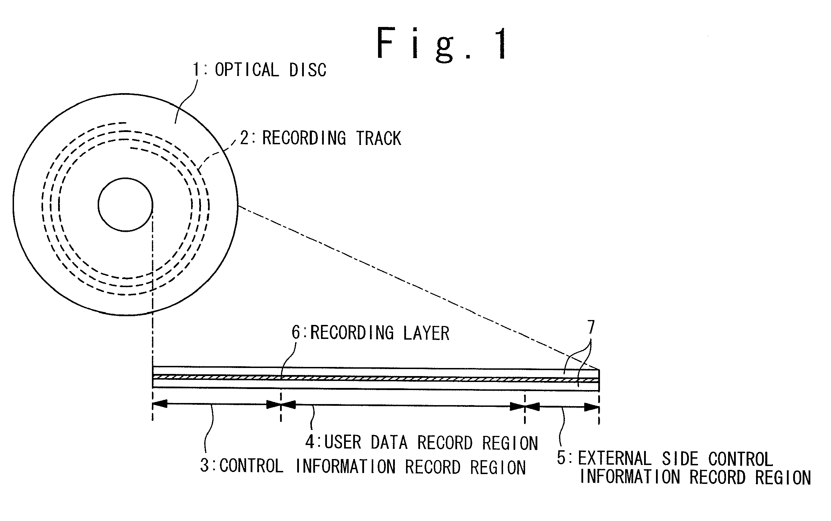

Fig. 1 shows an example of the optical disc of the rewritable type. A spiral recording track 2 is formed on the optical disc 1. The bottom side of Fig. 1 shows the sectional view of the optical disc 1. As shown in Fig. 1, recording area formed in the optical disc 1 is divided into a control information record region 3, a user data record region 4 and an external side control information record region 5, from the internal to the external circumferential side in the radius direction of the optical disc 1. A part of the control information record region 3 can be formed by embossed pre-pits.

The control information indicating the state of the disc is typically recorded in the control information record region 3 located in the internal circumference. The control information is essential for recording or reproducing by the drive unit and includes the data record position in the user data record region 4, the parameter information for the servo control, the recording power information and the like. The user data and the control information are recorded in the optical disc 1, for example, at the minimum recording unit referred to as the ECC block. The data to be recorded in the ECC block is formed by adding address information and error correction code to the original user data, and executing a code conversion to the data rows to be recorded on the optical disc a after a proper shuffling of the data arrangement. In the case of DVD, the coding called as 8/16 code conversion is being adopted.

In the drive unit, user data is recorded in desirable area in the user data record region 4, in accordance with the request on a host side. In some cases, data is only intermittently recorded on the user data record region in the optical disc. For stably reproducing such an optical disc by a reproduce-dedicated drive unit, the drive unit executes the dummy data record operation (data padding). In the dummy data record operation, dummy data is recorded on the area in the user data record region 4 so that the record pit rows are continuously formed. This is because in the drive unit dedicated to the reproduction, since only the pit record can be accessed in many cases, the access to the area striding over the non-record area is difficult.

As a method for controlling the data recording by the drive unit as mentioned above, a method that uses a bit is considered, for example, as disclosed in Japanese Laid Open Patent Application (JP-A-Heisei, 11-86418). In this bit map method, as shown in Fig. 2, the recording state of each ECC block 20 on the recording track 2 is represented in one bit in the bit map by one-to-one correspondence. For example, a data "1" of the bit map represents an recording area 25 recording data, and a data "0" of the bit map represents an area in which data is not recorded. The bit map in which the bits are corresponding to all ECC blocks 20 in the user data record region 4 respectively by one-to-one correspondence can be generated. The drive unit can recognize the recording states of all ECC blocks 20 in the user data record region 4 with reference to this bit map. Thus, the data padding can be safely executed by the drive unit without any loss of the user data.

However, in the bit map where one bit corresponds to one ECC block as mentioned above, as the capacity of the user data record region 4 becomes larger, the data amount of the bit map itself becomes associatedly larger. Thus, it takes a considerable time for searching the non-recorded area from the bit map, especially under the condition that the processing ability of the drive unit is not high in performance.

Also, depending on the structure of the ECC blocks 20 to be recorded on the optical disc 1 and the position accuracy of the recording, there is a possibility that the rewriting of one ECC block 20 causes a part of the data in the front and back ECC blocks 20 to be overwritten and broken. In short, there is a case that the data padding causes the deterioration in the reproduction property of the already-recorded user data in the front and back ECC blocks. For example, in the current DVD recording medium, unless the recording position is adjusted at the precision of a few channel bits, a part of the ECC blocks is overlapped and rewritten.

For example, in the case of the optical disc where the user data is recorded on only one ECC block and no data is recorded before and after it, when the drive unit performs the data padding on this non-recorded region, there is a possibility that a part before and after this ECC block is rewritten so that the reliability of data is deteriorated.

In Japanese Laid Open Patent Application (JP-P2003-297020A), an optical disc and a disc drive unit is described. In this technique, a resink pattern is inserted to every segment of an optical disc of the sample servo to prevent the optical disc from a bit slip over a segment. Also, by placing a writing continuing position after link data, a detection of synchronization signal in reproduction is improved.

In Japanese Laid Open Patent Application (JP-P2004-13967A), a method, a device and a medium for the optical disc recording is described. This technique make the recovery possible, when a fixed address of a rewritable optical disc at which the management information is recorded cannot be read out, the recovery is made possible.

In Japanese Laid Open Patent Application (JP-P2005-100646A), a information recording medium is described. In this technique, the deterioration of the error correction function is prevented in the reproduction of an information recording medium, and the waste of the memory area is suppressed.

In Japanese Laid Open Patent Application (JP-P2005-38595A), a technique for improving the real time operability of the stream information recording is described.

### Summary of the Invention

It is therefore an object of the present invention to provide a recording control method and a drive unit of a rewritable type optical disc for reducing the time required to search a non-record area.

Another object of the present invention is to provide a recording control method and a drive unit of a rewritable type optical disc which is efficient and can reduce the loss of user data.

Still another object of the present invention is to provide a recording control method and a drive unit of a rewritable type optical disc that maintains the reproduction characteristic of already-recorded user data even if data padding is executed.

Moreover, still another object of the present invention is to provide a recording control method and a drive unit of a rewritable type optical disc that maintains the data reliability.

According to an aspect of the present invention, a control method of an optical disc recording includes: (a) recording record data in each of a plurality of ECC blocks being a minimum unit area of data recording on a rewritable optical disc, wherein the optical disc includes a user data region in which user data is recorded and a control information record region in which control information indicating a state of the optical disc is recorded; (b) assigning a plurality of recording blocks to the user data region, wherein each of the plurality of recording blocks includes at least two of the plurality of ECC blocks; (c) recording a bit map in the control information record region, wherein the bit map represents a recording state of each of the plurality of recording blocks by using 1 bit data, and a size of the bit map is equal to or smaller than a size of each of the plurality of ECC blocks; (d) searching a designated recording state recording block having a designated recording state from the plurality of recording blocks by using the bit map; and (e) padding a part of the designated recording state recording block by recording a predetermined data.

The control information record region may include an internal side control information record region placed in the internal circumferential side of the optical disc and an external side control information record region placed in the external circumferential side of the optical disc.

According to another aspect of the present invention, the control method of an optical disc recording according to claim 1, wherein the (a) recording includes: adding a head associated part to a head of an effective data part; and adding a tail associated part to a tail of the effective data part. The effective data part and the head associated part adjacent to the effective data part and the tail associated part adjacent to the effective data part are included in one of the plurality of ECC blocks. Preferably, the head associated part is larger than the tail associated part in data length. The head associated part or the tail associated part may include a fixed pattern used in synchronizing a clock for reading or writing data of the optical disc. Or The head associated part or the tail associated part includes a synchronization pattern used in frame synchronization for reading or writing data of the optical disc.

According to further another aspect of the present invention, the (a) recording includes: adding an additive record row part to a tail of the record data of a continuous ECC block row including at least two of the plurality of ECC blocks which are continuously recorded in a recording track of the optical disc, when the recorded data is recorded in all of the plurality of ECC blocks included in the continuous ECC block row. Preferably, the additive record row part is larger than a positioning accuracy when data is recorded in the optical disc and smaller than the head associated data in data length.

In further another aspect of the present invention, each 1 bit data being element of the bit map indicates whether data satisfying a predetermined condition is stored in all of the plurality of the ECC blocks included in the recording block corresponding to the 1 bit data. Preferably, whether data recorded in the ECC block has a data attribute is used as the predetermined condition.

In further another aspect of the present invention, the (d) searching includes: searching a padding recording block from the plurality of recording blocks including a ECC block designated from the plurality of ECC blocks and requested to record data by a host computer, wherein the padding recording block includes a non-requested ECC block of the plurality of ECC blocks not being requested to record data by the host computer, and the recording state of the padding recording block recorded in the bit map indicates that data is not recorded. The (e) padding includes: recording data satisfying a predetermined condition in the plurality of ECC blocks included in the padding recording block and not being the non-requested ECC block.

In further another aspect of the present invention, each of the plurality of recording blocks has preferably only two of the plurality of ECC blocks.

In an aspect of the present invention, an optical disc drive unit includes: a data recording circuit configured to record record data in each of a plurality of ECC blocks being a minimum unit area of data recording on a rewritable optical disc, wherein the optical disc includes a user data region in which user data is recorded and a control information record region in which control information indicating a state of the optical disc is recorded; a bit map control circuit configured to generate a bit map representing a recording state of each of the plurality of recording blocks by using a corresponding 1 bit data and to record the bit map in the control information record region, wherein the plurality of recording blocks are assigned to the user data region, each of the plurality of recording blocks includes at least two of the plurality of ECC blocks, and a size of the bit map is equal to or smaller than a size of each of the plurality of ECC blocks; wherein the optical disc drive unit searches a designated recording state recording block having a designated recording state from the plurality of recording blocks by using the bit map and executes a padding on a part of the designated recording state recording block by recording a predetermined data.

In another aspect of the present invention, the record data includes: an effective data part; a head associated part to a head of the effective data part; and a tail associated part to a tail of the effective data part, and the data recording circuit rewrites a designated ECC block of the plurality of ECC blocks so as not to maintain the head associated part and the tail associated part of the designated ECC block. Preferably, the head associated part is larger than the tail associated part in data length. The head associated part or the tail associated part may include a fixed pattern used in synchronizing a clock for reading or writing data of the optical disc. Or the head associated part or the tail associated part may include a synchronization pattern used in frame synchronization for reading or writing data of the optical disc.

In further another aspect of the present invention, the data recording circuit adds an additive record row part to a tail of the record data of a continuous ECC block row including at least two of the plurality of ECC blocks which are continuously recorded in a recording track of the optical disc, when the recorded data is recorded in all of the plurality of ECC blocks included in the continuous ECC block row. Preferably, the additive record row part is larger than a positioning accuracy when data is recorded in the optical disc and smaller than the head associated data in data length.

In further another aspect of the present invention, each 1 bit data being element of the bit map indicates whether data satisfying a predetermined condition is stored in all of the plurality of the ECC blocks included in the recording block corresponding to the 1 bit data. Preferably, whether data recorded in the ECC block has a data attribute is used as the predetermined condition.

In further another aspect of the present invention, the bit map control circuit searches a padding recording block from the plurality of recording blocks including a ECC block designated from the plurality of ECC blocks and requested to record data by a host computer, wherein the padding recording block includes a non-requested ECC block of the plurality of ECC blocks not being requested to record data by the host computer, and the recording state of the padding recording block recorded in the bit map indicates that data is not recorded. The data recording circuit records data satisfying a predetermined condition in the plurality of ECC blocks included in the padding recording block and not being the non-requested ECC block.

In further another aspect of the present invention, each of the plurality of recording blocks has only two of the plurality of ECC blocks.

According to the present invention, it is possible to provide a recording control method and a drive unit of a rewritable type optical disc for reducing the time required to search a non-record area.

Also, according to the present invention, it is possible to provide a recording control method and a drive unit of a rewritable type optical disc which is efficient and can reduce the loss of user data.

Moreover, according to the present invention, it is possible to provide a recording control method and a drive unit of a rewritable type optical disc that maintains the reproduction characteristic of already-recorded user data even if data padding is executed.

Moreover, according to the present invention it is possible to provide a recording control method and a drive unit of a rewritable type optical disc that maintains the data reliability.

### Brief Description of the Drawings

Fig. 1 is a planar and sectional views for explaining a rewritable type optical disc;

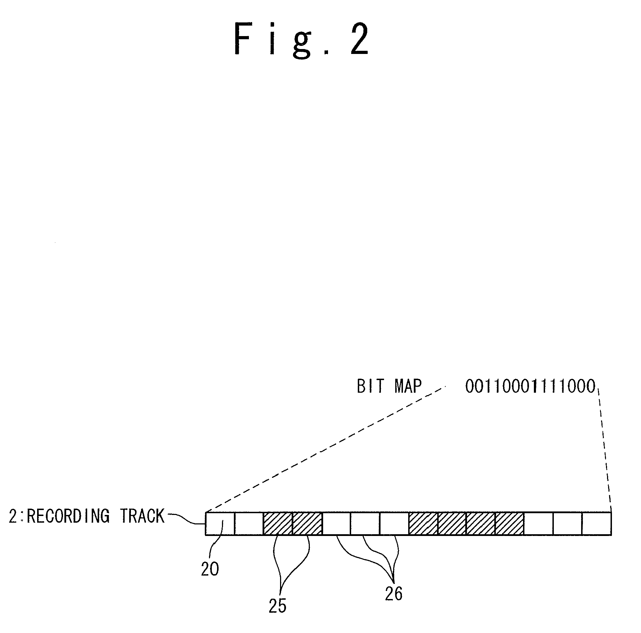

Fig. 2 is a view for explaining a state management based on a conventional bit map;
Fig. 3 is a block diagram showing the configuration of a drive unit according to an embodiment of the present invention;
Fig. 4 is a view for explaining the format of the recording track according to an embodiment;
Fig. 5 is a view for explaining an example where an additional recording is performed on the recording track according to an embodiment;
Fig. 6 is a view showing the relation between a bit map and a recording track according to an embodiment; and
Figs. 7A, 7B are views for explaining the data padding according to an embodiment.

### Description of the Preferred Embodiments

Embodiments of the optical disc recording control method and the drive unit according to the present invention will be described below with reference to the attached drawings.

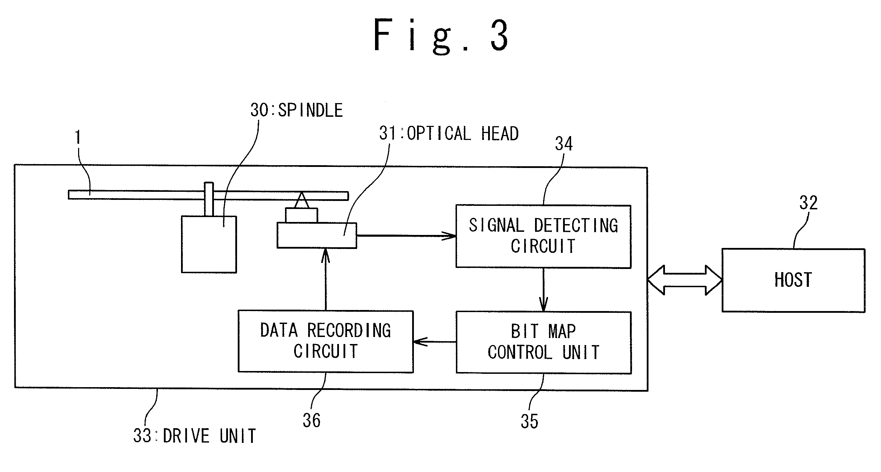

Fig. 3 shows a configuration block diagram of a drive unit 33 according to an embodiment of the present invention. The drive unit 33 contains a spindle 30, an optical head 31, a signal detecting circuit 34, a bit map control circuit 35 and a data recording circuit 36.

Through the optical head 31, data is recorded on and reproduced from the optical disc 1 set in the spindle 30. The reproduction signal read from the optical disc for reproducing the recorded content that is detected by the optical head 31 is sent through the signal detecting circuit 34 to the bit map control circuit 35. This bit map control circuit 35 judges a record/non-record state showing whether the respective recording areas stores data or not and generates a new bit map. In accordance with the request for recording instructed by a host 32 and the state of the generated bit map, the data recording circuit 36 carries out the recording of user data on the optical disc 1, the data padding, and the recording of control information. The drive unit 33 operates various functions for realizing the recording method described later, exemplified by the retrieval of non-record areas through a bit map, the data padding to non-record areas, the data padding before and after the recoding in association with a request for recording by the host.

As shown in Fig. 1, the spiral recording track 2 is formed on the optical disc 1. In the sectional view shown in Fig. 1, in a recording layer 6, the recording/reproducing is carried out through collected light spot formed through a transparent layer 7. As the recording layer 6, for example, a multi-layer film is used where the phase change material like GeSbTe compound is sandwiched with the dielectric protection film made of SiN. As the transparent layer 7, a polycarbonate substrate formed by the injection molding on which a tracking groove for recording is formed can be used.

The area of the recording track 2 is divided into a control information record region 3, a user data record region 4 and an external circumference control information record region 5 from the internal to the external side of the optical disc 1. The control information record region 3 contains: the area for recording information indicating the states of the disc and user data, the area for performing the test recording to optimize the record condition and the like. The external circumference control information record region 5 contains: the area for recording information indicating the states of the disc and user data, the area for performing the test recording to optimize the record condition and the like. In some cases, the external circumference control information record region 5 is not formed on the optical disc 1. The user data record region 4 is set to have a predetermined capacity or to have a function for setting an arbitrary capacity in response to the operation signal supplied from the outside.

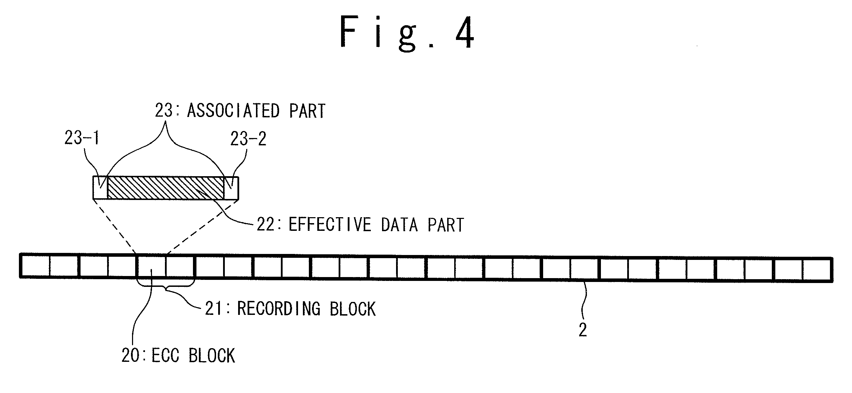

Fig. 4 is a view showing the configuration of the recording track 2. The recording track 2 contains a plurality of ECC blocks 20. The recording into and reproducing from the optical disc 1 are executed such that the ECC block 20 is defined as a minimum unit. The data to be recorded into the ECC block 20 is formed by adding add address information and error correction code to the original user data, and executing a code conversion to the data rows to be recorded on the optical disc 1 after a proper shuffling of the data arrangement. As for the code conversion, it is possible to use a coding referred to as, for example, the 1-7 modification where a two-bit data is correlated to 4 codes in which "1" or "0" are continuous in a 3-bit code and the continuing length of "1" or "0" becomes larger than 2. Also, as the capacity of the original data included in one ECC block 20, it is possible to use 32 kilo bytes or 64 kilo bytes similarly to that of DVD.

The ECC block 20 of the present embodiment has: an effective data part 22 that includes the original data and the added address information and error correction code and the like; and associated parts 23 added to before and after it. Those ECC blocks 20 are continuously arranged along the recording track 2. In the adjacent ECC block 20, the associated part 23 is sandwiched between the effective data parts 22. Thus, by setting the width (namely, the length along the recording track 2) of the associated part 23 to be larger than the recording position accuracy of the ECC block 20 of the recording, when an ECC block 20 is rewritten, an erroneous rewriting on the effective data parts 22 in the ECC blocks 20 before and after the rewritten ECC block are prevented. That is, the erroneous loss of already-recorded data is prevented.

In the coding where the code conversion is performed on the record data row, the data row referred to as a synchronization pattern to carry out the synchronization at the reproduction is inserted for every predetermined cycle. This synchronization pattern is necessary to read the following significant data. Thus, the synchronization pattern is recorded in the effective data parts 22.

For example, when additional information is added to the original data of 64 kilo bytes, the effective data part 22 has a data amount of about 77 kilo bytes. When the recording is assumed to be carried out at a density of 0.153 µm/bit, it is possible to easily reserve the position accuracy of about ±3 bytes = ±24 bits being nearly equal to 3.5 µm at the recording. Also, when the reproduction is carried out from the non-recorded area to the recorded area, the function of the clock synchronization in the head associated part 23-1 of the ECC block 20 is considered so that the head associated part 23-1 is set to be longer than the tail associated part 23-2. Thus, the associated part 23 of about 70 bytes as the head associated part 23-1 and the associated part 23 of about 20 bytes as the tail associated part 23-2 are set for each ECC block 20. The associated part 23 added to each ECC block 20 has about 90 bytes. As compared with the capacity of 64 kilo bytes of the ECC block 20, the increased capacity in a line direction (namely, the added length along the direction of the recording track 2) caused by the additional associated parts is only about 0.1 %.

In this way, it is possible to suppress the loss of the user data by adding a small amount of cushion area that does not bring about any significant problem for the recording efficiency. In the associated parts 23, a fixed pattern for the clock synchronization or the synchronization pattern used for the frame synchronization when data is read from or written in the optical disc 2 can be formed.

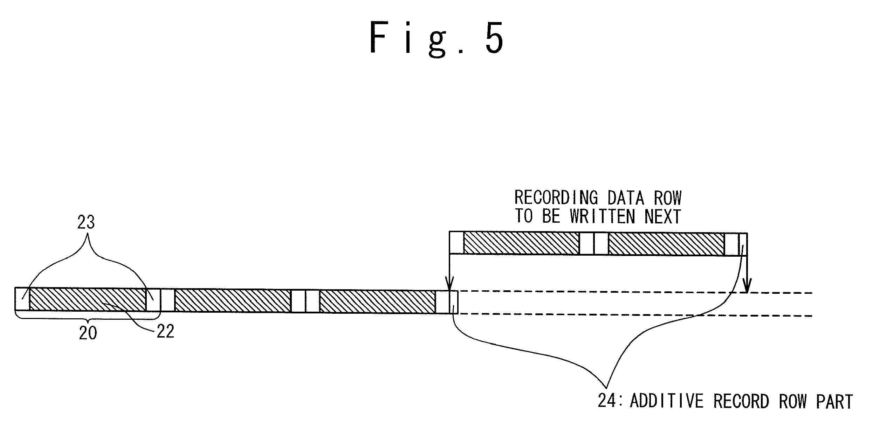

In the actual case, when the ECC block 20 is recorded, as shown in Fig. 5, an additive record row part 24 is added to the final tail of the row of the continuously-recorded ECC blocks 20. The length of the additive record row part 24 is set to be larger than the position accuracy of the recording and smaller than the head associated part 23-1 of the ECC block 20. With such setting, even if the record row to be continuously written next is recorded away from a normal position, the additive record row part 24 is recorded in that gap. That is, the tail associated part 23-2 of the previously-recorded ECC block 20 or the additive record row part 24 and the head associated part of the record row to be additively recorded next are always overlapped with each other. Thus, a non-recorded gap does not remain on the recording track 2. Also, the additively written record row is never overlapped with the effective data part 22 of the already-recorded ECC block 20. For example, in the previous numeral example in which the position accuracy has ±3 bytes, 8 bytes as the additive record row part 24 and 70 bytes as the head associated part 23-1 of the ECC block are set so that the condition is easily satisfied.

As mentioned above, by adding the associated part 23 and the additive record row part 24 to the data, each ECC block 20 can be freely recorded and rewritten. Also, the data padding in the non-recorded region where the bit map is used by the drive unit 33 can be executed with suppressing the loss of the user data.

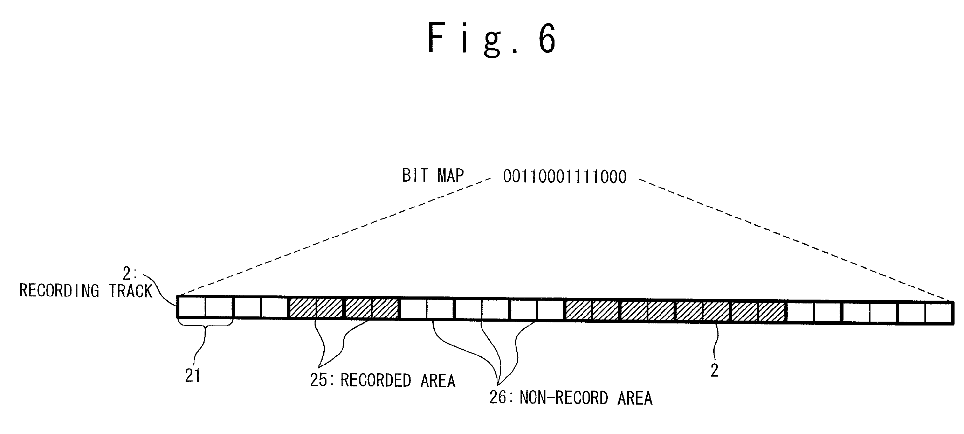

Moreover, the feature of the present embodiment lies in the configuration where recording blocks 21 each including the plurality of ECC blocks 20 are assigned to the whole of the user data record region 4, as shown in Fig. 4. As shown in Fig. 6, respective recording block 21 is correlated to one bit of the bit map. Then, whether each recording block 21 in the recording track 2 is an already-recorded recorded area 25 or a non-record area 26 is indicated by using "1" and "0". Of course, "1" and "0" can be used to indicate the reverse states.

In this way, since the bit map indicates the record state for each recording block 21, as compared with the case of the bit map representing the states of all ECC blocks 20, the capacity of the bit map is compressed to the half or less. By compressing the data size of the bit map, the drive unit 33 can easily search the non-record area 26 from the bit map and carry out the data padding.

Also, even if the optical disc has a multi-layer structure of two layers or more and has an enhanced memory area, the size of the bit map can be compressed to the size which can be stored in one ECC block 20. In the drive unit 33, the error correcting process and the signal reproducing process are carried out by the unit of ECC block in many cases. Thus, if the bit map is compressed and stored in one ECC block 20, it is easy to read and write the bit map to be recorded into the control information record region 3 and retrieve the bit map information.

When a recording block 21 includes the plurality of ECC blocks 20, all of the plurality of ECC blocks 20 included in the recording block 21 are not always recorded in accordance with a recording request from the host 32. Thus, there is the possibility of a situation where the already-recorded ECC block and the non-recorded ECC block are mixed in the recording block 21. In such a, in order to make the bit map and the record state of the recording track coincide to each other, the drive unit 33 carries out the data padding in accordance with the recording request from the host 32.

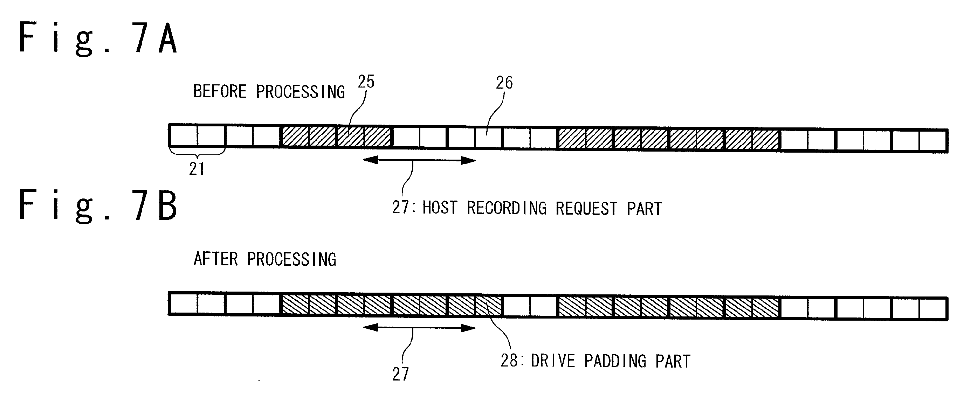

Referring to Figs. 7A, 7B, the data padding in the above mentioned case is explained. As shown in Fig. 7A, the recorded area 25 and the non-record area 26 exist on the recording track 2, at the unit of the recording block 21. In this situation, it is supposed that the recording of the data is instructed from the host 32 to a host recording request part 27. The host recording request part 27 is not coincident with the boundary of the recording block 21. In the case of Fig. 7A, the front end of the host recording request part 27 exists in the boundary between the adjacent ECC blocks inside one record block of the recorded area 25. Thus, even if the overwrite recording is carried out in accordance with the recording request from the host 32, the record state of the recorded area 25 is not changed. Hence, there is no problem with regard to this part.

The back end of the host recording request part 27 exists in the boundary between the adjacent ECC blocks inside one recording block 21 of the non-record area 26. Thus, in the case where the recording request is sent from the host, the recording is performed only on some ECC blocks 20 (in the example of Fig. 7, one ECC block 20) in the recording block 21, and the remaining ECC blocks 20 in the recording block 21 remains in the non-recorded state. In the case of the recording request including some part of the non-record block 26 as mentioned above, as shown in Fig. 7B, the data padding is performed on the remaining ECC blocks 20 through a drive padding 28. In this way, by adding the data padding operation of small amount of processing, in the drive unit 33, the management can be executed under the condition that the recorded/non-recorded state of the recording blocks 21 and the bit map are always coincident to each other.

In order to reduce the bit map while the data padding operation is kept to the minimum, the number of the ECC blocks 20 included in one recording block 21 is desired to be 2. In this case, for one host recording request, it is adequate for the drive unit 33 to perform the data padding on a maximum of two ECC blocks 20

If the memory size of the optical disc is very large so that the bit map thereof cannot be stored in an ECC block, it is naturally possible to set 3 or 4 ECC blocks 20 as one recording block 21. However, by considering the operation load of the data padding, the number of the ECC blocks is preferably below 10 at most, from the viewpoint of the recording speed.

According to the present invention, the recording state of the recording track of an optical disc is correctly indicated in the bit map. Also, the recording to each ECC block is executed without losing data. Thus, the drive unit 33 can efficiently search the bit map of the small capacity and easily perform the data padding on the non-record area.

In the above-mentioned explanations, the indication of the record state in the bit map is divided into the two kinds of the non-recorded state and the already-recorded state. However, when different attributes, for example, a data attribute, a readout attribute and the like are added to the ECC block, it is possible to represent whether the data attribute is recorded or not in the bit map.

In Fig. 1, the structure of an optical disc having the single recording layer is shown. However, the present invention can be similarly applied to the optical disc having the multi-layer recording structure of two layers or more.

As mentioned above, according to the present invention, it is possible to realize the recording control method and the drive unit of the rewritable type optical disc which achieve a new effect.

According to an embodiment, in the recording on a rewritable optical disc (1), the searching time for the no data area is reduced. In this method, data is recorded in ECC blocks (20), each of which is a minimum unit region in the recording operation by the drive unit (33). Recording blocks (21) are assigned to the user data region (4) of the optical disc so that each recording block includes at least two ECC blocks. A bit map is generated. Every 1 bit data of the bit map represents the recording state of a recording block (21). By referencing the bit map, the area in which data is not recorded can be searched in a short time.

## Claims

1. A control method of an optical disc recording comprising:
(a) recording record data in each of a plurality of ECC blocks (20) being a minimum unit area of data recording on a rewritable optical disc (1), wherein the optical disc includes a user data region (4) in which user data is recorded and a control information record region (3) in which control information indicating a state of the optical disc is recorded;
(b) assigning a plurality of recording blocks (21) to the user data region (4), wherein each of the plurality of recording blocks (21) includes at least two of the plurality of ECC blocks (20);
(c) recording a bit map in the control information record region (3), wherein the bit map represents a recording state of each of the plurality of recording blocks (21) by using 1 bit data, and a size of the bit map is equal to or smaller than a size of each of the plurality of ECC blocks (20);
(d) searching a designated recording state recording block having a designated recording state from the plurality of recording blocks (21) by using the bit map; and
(e) padding a part of the designated recording state recording block by recording a predetermined data.

2. The control method of an optical disc recording according to claim 1, wherein the (a) recording includes:
adding a head associated part (23-1) to a head of an effective data part (22); and
adding a tail associated part (23-2) to a tail of the effective data part (22),
wherein the effective data part and the head associated part (23-1) adjacent to the effective data part and the tail associated part (23-2) adjacent to the effective data part are included in one of the plurality of ECC blocks (20).

3. The control method of an optical disc recording according to claim 2, wherein the head associated part is larger than the tail associated part in data length.

4. The control method of an optical disc recording according to claim 2 or 3, wherein the head associated part (23-1) or the tail associated part (23-2) includes a fixed pattern used in synchronizing a clock for reading or writing data of the optical disc (1).

5. The control method of an optical disc recording according to any of claims 2 to 4, wherein the head associated part (23-1) or the tail associated part (23-2) includes a synchronization pattern used in frame synchronization for reading or writing data of the optical disc.

6. The control method of an optical disc recording according to any of claims 1 to 5, wherein the (a) recording includes:
adding an additive record row part (24) to a tail of the record data of a continuous ECC block row including at least two of the plurality of ECC blocks which are continuously recorded in a recording track (2) of the optical disc (1), when the recorded data is recorded in all of the plurality of ECC blocks (20) included in the continuous ECC block row.

7. The control method of an optical disc recording according to claim 6, wherein the additive record row part (24) is larger than a positioning accuracy when data is recorded in the optical disc and smaller than the head associated data (23-1) in data length.

8. The control method of an optical disc recording according to any of claims 1 to 7, wherein each 1 bit data being element of the bit map indicates whether data satisfying a predetermined condition is stored in all of the plurality of the ECC blocks included in the recording block corresponding to the 1 bit data.

9. The control method of an optical disc recording according to any of claims 1 to 7, wherein each 1 bit data being element of the bit map indicates whether data having a data attribute is stored in all of the plurality of the ECC blocks included in the recording block corresponding to the 1 bit data.

10. The control method of an optical disc recording according to any of claims 1 to 9, wherein the (d) searching includes:
searching a padding recording block from the plurality of recording blocks including a ECC block designated from the plurality of ECC blocks (20) and requested to record data by a host computer (32),
wherein the padding recording block includes a non-requested ECC block (28) of the plurality of ECC blocks not being requested to record data by the host computer, and the recording state of the padding recording block recorded in the bit map indicates that data is not recorded, and
the (e) padding includes:
recording data satisfying a predetermined condition in the plurality of ECC blocks included in the padding recording block and not being the non-requested ECC block (28).

11. The control method of an optical disc recording according to any of claims 1 to 10, wherein each of the plurality of recording blocks has only two of the plurality of ECC blocks.

12. An optical disc drive unit comprising:
a data recording circuit (36) configured to record record data in each of a plurality of ECC blocks (20) being a minimum unit area of data recording on a rewritable optical disc (1), wherein the optical disc includes a user data region (4) in which user data is recorded and a control information record region (3) in which control information indicating a state of the optical disc is recorded;
a bit map control circuit (35) configured to generate a bit map representing a recording state of each of the plurality of recording blocks (21) by using a corresponding 1 bit data and to record the bit map in the control information record region (3),
wherein the plurality of recording blocks (21) are assigned to the user data region (4), each of the plurality of recording blocks includes at least two of the plurality of ECC blocks (20), and a size of the bit map is equal to or smaller than a size of each of the plurality of ECC blocks;
wherein the optical disc drive unit (33) searches a designated recording state recording block having a designated recording state from the plurality of recording blocks by using the bit map and executes a padding on a part of the designated recording state recording block by recording a predetermined data.

13. The optical disc drive unit according to claim 12, wherein the record data includes: an effective data part; a head associated part to a head of the effective data part; and a tail associated part to a tail of the effective data part, and
the data recording circuit rewrites a designated ECC block of the plurality of ECC blocks so as not to maintain the head associated part and the tail associated part of the designated ECC block.

14. The optical disc drive unit according to claim 13, wherein the head associated part is larger than the tail associated part in data length.

15. The optical disc drive unit according to claim 13 or 14, wherein the head associated part or the tail associated part includes a fixed pattern used in synchronizing a clock for reading or writing data of the optical disc.

16. The optical disc drive unit according to any of claims 13 to 15, wherein the head associated part or the tail associated part includes a synchronization pattern used in frame synchronization for reading or writing data of the optical disc.

17. The optical disc drive unit according to any of claims 12 to 16, wherein the data recording circuit adds an additive record row part to a tail of the record data of a continuous ECC block row including at least two of the plurality of ECC blocks which are continuously recorded in a recording track of the optical disc, when the recorded data is recorded in all of the plurality of ECC blocks included in the continuous ECC block row.

18. The optical disc drive unit according to claim 17, wherein the additive record row part is larger than a positioning accuracy when data is recorded in the optical disc and smaller than the head associated data in data length.

19. The optical disc drive unit according to any of claims 12 to 18, wherein each 1 bit data being element of the bit map indicates whether data satisfying a predetermined condition is stored in all of the plurality of the ECC blocks included in the recording block corresponding to the 1 bit data.

20. The optical disc drive unit according to any of claims 12 to 18, wherein each 1 bit data being element of the bit map indicates whether data having a data attribute is stored in all of the plurality of the ECC blocks included in the recording block corresponding to the 1 bit data.

21. The optical disc drive unit according to any of claims 12 to 20, wherein the bit map control circuit searches a padding recording block from the plurality of recording blocks including a ECC block designated from the plurality of ECC blocks and requested to record data by a host computer, wherein the padding recording block includes a non-requested ECC block of the plurality of ECC blocks not being requested to record data by the host computer, and the recording state of the padding recording block recorded in the bit map indicates that data is not recorded, and
the data recording circuit records data satisfying a predetermined condition in the plurality of ECC blocks included in the padding recording block and not being the non-requested ECC block.

22. The optical disc drive unit according to any of claims 12 to 21, wherein each of the plurality of recording blocks has only two of the plurality of ECC blocks.
